# EUROPÄISCHE PATENTSCHRIFT

(11) **EP 1 077 843 B1**
(45) Veröffentlichungstag und Bekanntmachung des Hinweises auf die Patenterteilung: **18.05.2005**
(21) Anmeldenummer: 00912400.9
(22) Anmeldetag: 29.02.2000
(51) Int. Cl.: B60S 1/24, F16C 11/06

(54) **WISCHERANTRIEB MIT EINEM REVERSIERBAREN GETRIEBEMOTOR**
WIPER DRIVE MECHANISM WITH A REVERSIBLE GEAR MOTOR
ORGANE D'ENTRAINEMENT D'ESSUIE-GLACE COMPORTANT UN MOTEUR A ENGRENAGE REVERSIBLE

(30) Priorität: 22.03.1999 DE 19912746
(43) Veröffentlichungstag der Anmeldung: 28.02.2001
(73) Patentinhaber: ROBERT BOSCH GMBH, 70442 Stuttgart (DE)
(72) Erfinder: KUEHBAUCH, Gerd, D-77830 Buehlertal (DE)
(86) Internationale Anmeldenummer: PCT/DE2000/000581
(87) Internationale Veröffentlichungsnummer: WO 2000/056582

(56) Entgegenhaltungen:
- DE-A- 3 243 238
- US-A- 2 728 244
- US-A- 3 216 753
- US-A- 3 702 718

## Beschreibung

### Stand der Technik

Die Erfindung geht aus von einem Wischerantrieb mit einem reversierbaren Getriebemotor nach dem Oberbegriff des Anspruchs 1.

Wischeranlagen für Kraftfahrzeuge werden in der Regel mit einem Wischerträger, einer sogenannten Platine, an der Karosserie eines Kraftfahrzeugs befestigt. Die Platine trägt einen Wischerantrieb mit einem Wischermotor und einem daran angebauten Getriebe, dessen Abtriebswelle in der Regel über eine Antriebskurbel und Gelenkstangen Kurbeln antreibt, die mit einer Antriebswelle für jeden Scheibenwischer fest verbunden sind. Die Gelenkstangen sind über zwei Kugelgelenke an der Antriebskurbel angelenkt, wobei die Gelenkachsen koaxial verlaufen. Ein solches aus den Kurbeln und den Gelenkstangen gebildetes Hebelgetriebe beansprucht wegen seiner Bauhöhe einen entsprechend hohen Einbauraum im Fahrzeug.

Aus EP 0 781 691 A1 ist ein Wischerantrieb bekannt, der aus einem Elektromotor mit einem Schneckengetriebe und einem Hebelcetriebe besteht. Auf der Abtriebswelle sitzt eine gekröpfte Antriebskurbel. Eine Gelenkstange, die über ein Kugelgelenk an der Antriebskurbel angelenkt ist, ist mit ihrem freien Ende ebenfalls über ein Kugelgelenk an einer als Kurbelplatte ausgebildeten Kurbel angelenkt, die an einer Antriebswelle eines Scheibenwischers befestigt ist. An der Kurbelplatte greift über ein weiteres Kugelgelenk eine zweite Gelenkstange an, die mit ihrem freien Ende an einer Kurbel angelenkt ist, die an einer Antriebswelle für einen zweiten Scheibenwischer befestigt ist. Das aus den Kurbeln und Gelenkstangen bestehende Hebelgetriebe ist sehr aufwendig und beansprucht relativ viel Bauraum. Ferner wird die Gelenkstange, die von der Antriebskurbel zur Kurbel des ersten Scheibenwischers führt von den Antriebskräften beider Scheibenwischer belastet. Entsprechend müssen die erste Gelenkstange und ihre Gelenke ausgelegt werden.

Aus der EP 0 683 739 ist ein Gelenk bekannt, bei dem drei Gelenkteile mit konzentrisch angeordneten, kugelförmigen Lagerflächen vorgesehen sind. Jedes Gelenkteil ist mit einer Gelenkstange bzw. einer Antriebskurbel fest verbunden. Die Befestigungen der Antriebskurbel und der Gelenkstangen erfordern in Richtung der gemeinsamen Schwenkachse einen großen axialen Bauraum.

Aus der US-A-3,216,753 ist ein gattungsgemässer Wischerantrieb mit einem reversierbaren Getriebemotor bekannt, der an einer Motorplatine befestigt ist, und auf dessen Abtriebswelle eine Kurbel sitzt, die über mindestens ein Gelenk mit einem Hebel eines Hebelgetriebes verbunden ist, wobei die Kurbel eine Kurbelplatte ist, an der nebeneinander in einer Ebene mindestens zwei Gelenke für zwei Hebel angeordnet sind. Die Gelenke sind als Kugelgelenke ausgebildet, wobei die Lagerschale, in der der kugelförmige Bereich des Kugelzapfens gelagert ist, aus zwei Teilen besteht. Ein erster Teil liegt mit einem Flansch auf einem Hebel, während ein Teil der Kugelkalotte in eine Öffnung des Hebels hineinragt. Ein zweiter Teil umfasst den restlichen Teil des Kugelbereichs und übergreift den Flanschbereich des ersten Teils. Er wird mit dem Hebel vernietet, sodass der erste Teil durch den zweiten Teil gehalten wird. Eine solche Lösung ist sowohl in der Herstellung als auch in der Montage aufwändig.

### Vorteile der Erfindung

Nach der Erfindung ist in die Kurbelplatte mindestens eine Lagerschale aus Kunststoff eingelassen, in der ein Kurbelzapfen mit seiner Kugel gelagert ist. Der Kurbelzapfen weist zwei diametral zueinander liegende Zapfen auf, die an einem gabelförmigen Ende eines Hebels in Form einer Gelenkstange befestigt sind, und im Bereich seiner kugelförmigen Kontur von der Lagerschale umfasst ist. Der Hebel kann sehr leicht gestaltet werden, indem er aus zwei Blechbiegeteilen zusammengesetzt ist und eine Fuge aufweist, die in einer Längsmittelebene parallel zu den gabelförmigen Enden verläuft. Da die Gelenkstangen jeweils nur durch die Antriebskräfte für einen Wischer belastet sind, können sie dünnwandig und leicht gestaltet werden.

Das freie Ende des Hebels ist in bekannter Weise an einer Kurbel angelenkt, die mit einer Antriebswelle eines der zwei Scheibenwischer fest verbunden ist. Die Kurbeln und die Gelenkstange bilden ein Hebelgetriebe. Der reversierbare Getriebemotor, der einen üblichen umlaufenden Motor ersetzt, schwenkt die angebaute Kurbel nur in einem begrenzten Winkelbereich, z.B. bis zu 180° um die Achse der Abtriebswelle.

Dadurch können die Gelenke in einer Ebene nebeneinander an der Kurbelplatte angeordnet werden, sodass sich ein sehr flaches Hebelgetriebe ergibt.

Die Gelenke an der Antriebskurbelplatte können einen unterschiedlichen Abstand zur Abtriebswelle haben. Dadurch können Unterschiede in der Hebelübersetzung ausgeglichen werden, die sich aus einer asymmetrischen Lage der Abtriebswelle zu den Antriebswellen der Scheibenwischer ergeben. Ferner kann für einen Scheibenwischer auf der Fahrerseite und einen Scheibenwischer auf der Beifahrerseite eine unterschiedliche Kinematik erzeugt werden.

In der Regel ist der Getriebemotor mittels einer Schraube an einer Motorplatine angeschraubt, während die Antriebskurbel auf der Abtriebswelle mit einer Schraube befestigt ist. Um die Bauhöhe in Richtung der Abtriebswelle gering zu halten, ist es zweckmäßig, die Kurbelplatte zu kröpfen, und zwar in der Weise, dass ihr freies Ende einen größeren Abstand zur Motorplatine aufweist, als der auf der Antriebswelle sitzende Teil. Dadurch erreicht man einen Bauraum für die Befestigungsschrauben des Getriebemotors ohne die Bauhöhe in Richtung der Antriebsachse zu vergrößern. Ferner besteht die Möglichkeit, an der Kurbelplatte Kugelzapfen zu befestigen, die zur Motorplatine weisen und somit ebenfalls den Bauraum in Richtung der Antriebsachse nicht vergrößern. Diese Art der Anlenkung ist auch vorteilhaft, wenn nur eine Gelenkstange an der Kurbelplatte angreift.

Weitere Vorteile ergeben sich aus der folgenden Zeichnungsbeschreibung.

### Zeichnung

In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: eine perspektivische Darstellung einer Kurbelplatte mit zwei Gelenken,
- Fig. 2: einen Teillängsschnitt einer Variante mit einer gekröpften Kurbelplatte und
- Fig. 3: eine Variante mit einem in die Kurbelplatte eingelassenen Gelenk.

### Beschreibung der Ausführungsbeispiele

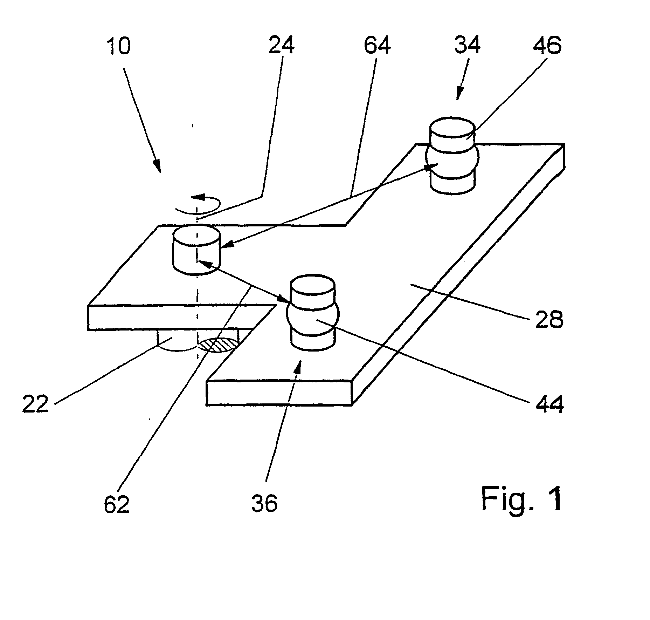

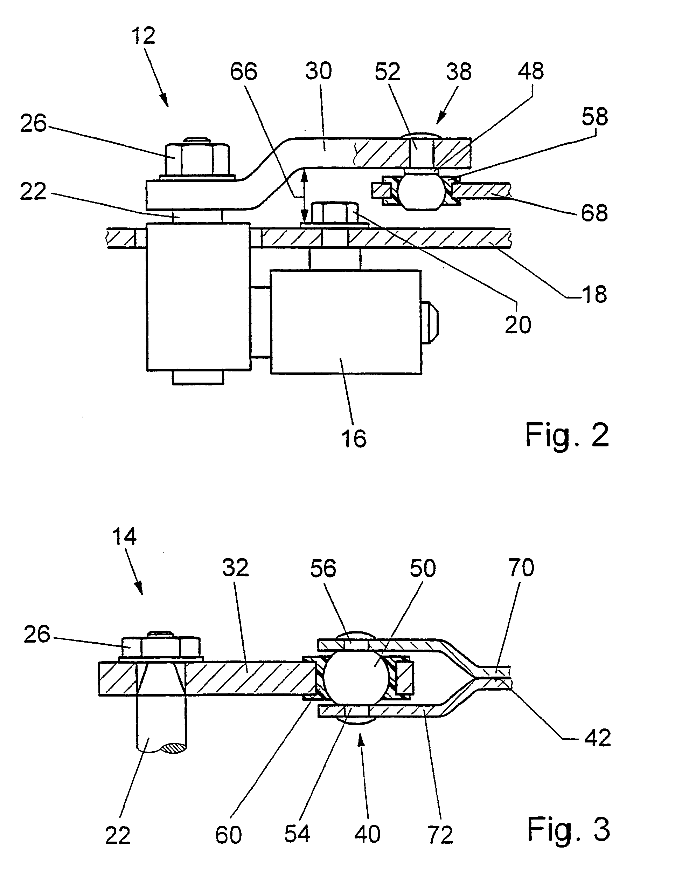

Die Wischerantriebe 10, 12, 14 nach den Fig. 1 bis 3 besitzen einen in Fig. 2 dargestellten, reversierbaren Getriebemotor 16, der mittels Schrauben 20 an einer Motorplatine 18 befestigt ist. An seiner Abtriebswelle 22 ist eine Kurbelplatte 28, 30, 32 mit einer Schraube 26 angeschraubt. Der Getriebemotor 16 schwenkt die Kurbelplatte 28, 30, 32 in einem begrenzten Winkelbereich, vorzugsweise bis zu 180°, um eine Achse 24 der Abtriebswelle 22.

In der Ausführung nach Fig. 1, die kein Ausführungsbeispiel der Erfindung darstellt, sondern nur das Verständnis der Erfindung erleichtert, ist die Kurbelplatte 18 eben und trägt zwei nebeneinander angeordnete Kugelbolzen 44, 46 von Gelenken 34, 36, die jeweils einen Abstand 62, 64 zur Achse 24 der Abtriebswelle 22 haben. Die Abstände 62, 64 können gleich sein. Sie können aber auch unterschiedlich ausgelegt werden, um die Kinematik für die beiden Scheibenwischer unterschiedlich zu gestalten oder eine asymmetrische Lage der Abtriebswelle 22 zu Antriebswellen der Scheibenwischer auszugleichen. Die Höhe des erforderlichen Bauraums wird im Wesentlichen nur durch die Dicke der Kurbelplatte 28 und die Höhe der Kugelbolzen 44, 46 bestimmt.

Die Ausführung nach Fig. 2 unterscheidet sich im Wesentlichen von der Ausführung nach Fig. 1 dadurch, dass die Kurbelplatte 30 gekröpft ist, sodass ihr freies Ende einen größeren Abstand 66 zur Motorplatine 18 aufweist, als der auf der Abtriebswelle 22 sitzende Teil. Dadurch gewinnt man Bauraum für die Befestigungsschrauben 20 des Getriebemotors 16. Ferner kann der größere Abstand 66 für Kugelzapfen 48 genutzt werden, deren Zapfen 52 mit der Kurbelplatte 30 vernietet sind. Der zur Motorplatine 18 vorstehende kugelförmige Teil des Kugelzapfens 18 ist von einer Lagerschale 58 umgeben, die zweckmäßigerweise aus Kunststoff hergestellt ist und an eine Gelenkstange 68 angespritzt ist. Durch die parallele Anordnung der Antriebswelle 22 der Schraube 20 zur Befestigung des Getriebemotors und des Gelenks 38 wird der zur Verfügung stehende Bauraum in Richtung der Achse 24 der Abtriebswelle 22 optimal genutzt.

Bei der Ausführung nach Fig. 3 ist die Kurbelplatte 32 eben. Sie kann aber auch ähnlich wie in Fig. 2 gekröpft sein. Sie unterscheidet sich von den oben beschriebenen Ausführungen dadurch, daß in die Kurbelplatte 32 eine Lagerschale 60 aus Kunststoff eingespritzt ist, die einen Kugelzapfen 50 im Bereich seiner kugelförmigen Kontur umfaßt. Der Kugelzapfen 50 besitzt zwei Zapfen 54, 56, die diametral angeordnet sind und mit einem gabelförmigen Ende 72 der Gelenkstange 70 vernietet sind. Die Gelenkstange 70 ist aus zwei Blechbiegeteilen zusammengesetzt, die an einer Fuge 42 miteinander verbunden sind. Die Fuge 42 verläuft in einer mittleren Längsebene der Gelenkstange 70 parallel zu dem gabelförmigen Ende 72. Die Wandstärke der Kurbelplatte 32 bietet genügend Raum für die Aufnahme des Gelenks 40, während die dünnwandige Gelenkstange 70 den Bauraum in Richtung der Achse 24 der Abtriebswelle 22 nicht vergrößert. Die Ausführung nach Fig. 3 kann auch ähnlich wie die Ausführung nach Fig. 1 zwei oder mehrere Gelenke aufweisen.

## Patentansprüche

1. Wischerantrieb (10, 12, 14) mit einem reversierbaren Getriebemotor (16), der an einer Motorplatine (18) befestigt ist und auf dessen Abtriebswelle (22) eine Kurbel (28, 30, 32) sitzt, die als Kurbelplatte (28, 30, 32) ausgebildet ist, an der nebeneinander in einer Ebene mindestens zwei Gelenke (34, 36, 38, 40) für zwei Hebel (68, 70) eines Hebelgetriebes angeordnet sind, **dadurch gekennzeichnet, dass** in die Kurbelplatte (32) mindestens eine Lagerschale (60) aus Kunststoff eingelassen ist, in der ein Kugelzapfen (50) mit seiner Kugel gelagert ist, wobei der Kugelzapfen (50) zwei diametral zueinander liegende Zapfen (54, 56) aufweist, die an einem gabelförmigen Ende (72) eines Hebels (70) befestigt sind, und im Bereich seiner kugelförmigen Kontur von der Lagerschale (60) umfasst ist.

2. Wischerantrieb (10, 12, 14) nach Anspruch 1, **dadurch gekennzeichnet, dass** der Hebel (70) aus zwei Blechbiegeteilen zusammengesetzt ist und eine Fuge (42) aufweist, die in einer Längsmittelebene parallel zu dem gabelförmigen Ende (72) verläuft.

3. Wischerantrieb (12) nach Anspruch 1 oder 2, **dadurch gekennzeichnet, dass** die Kurbelplatte (30) eine gekröpfte Form aufweist und ihr freies Ende einen größeren Abstand (66) zur Motorplatine (18) aufweist als der auf der Abtriebswelle (22) sitzende Teil.

4. Wischerantrieb (12) nach dem Oberbegriff von Anspruch 1, **dadurch gekennzeichnet, dass** die Kurbelplatte (30) eine gekröpfte Form aufweist und ihr freies Ende einen größeren Abstand (66) zur Motorplatine (18) aufweist als der auf der Abtriebswelle (22) sitzende Teil, wobei an dem freien Ende der Kurbelplatte (30) mindestens ein Kugelzapfen (48) befestigt ist, der zur Motorplatine (18) weist.

## Claims

1. Wiper drive mechanism (10, 12, 14) with a reversible gear motor (16), which is fastened to a motor mounting plate (18) and on the output shaft (22) of which is seated a crank (28, 30, 32) which is designed as a crank plate (28, 30, 32), on which at least two articulations (34, 36, 38, 40) for two levers (68, 70) of a lever mechanism are arranged next to each other in a plane, **characterized in that** at least one bearing shell (60) of plastic, in which a ball pin (50) is mounted by means of its ball, is embedded in the crank plate (32), the ball pin (50) having two pins (54, 56) which lie diametrically with respect to each other and are fastened to a fork-shaped end (72) of a lever (70), and being surrounded in the region of its spherical contour by the bearing shell (60).

2. Wiper drive mechanism (10, 12, 14) according to Claim 1, **characterized in that** the lever (7) is composed of two sheet-metal bending parts and has a joint (42) which runs in a longitudinal central plane parallel to the fork-shaped end (72).

3. Wiper drive mechanism (12) according to Claim 1 or 2, **characterized in that** the crank plate (30) has a bent shape and its free end is at a greater distance (66) from the motor mounting plate (18) than the part seated on the output shaft (22).

4. Wiper drive mechanism (12) according to the precharacterizing clause of Claim 1, **characterized in that** the crank plate (30) has a bent shape and its free end is at a greater distance (66) from the motor mounting plate (18) than the part seated on the output shaft (22), at least one ball pin (48) which points towards the motor mounting plate (18) being fastened to the free end of the crank plate (30).

## Revendications

1. Entraînement d'essuie-glace (10, 12, 14) comprenant un motoréducteur réversible (16) fixé sur une platine de moteur (18) et sur l'arbre de sortie (22) duquel est montée une manivelle (28, 30, 32) réalisée sous la forme d'une plaque manivelle (28, 30, 32) à laquelle sont attachées, l'une à côté de l'autre dans un même plan, au moins deux articulations (34, 36, 38, 40) prévues pour deux leviers (68, 70) d'une tringlerie,
**caractérisé en ce que**
dans la plaque manivelle (32) est encastrée au moins une coquille de palier (60) en matière plastique dans laquelle un tourillon à rotule (50) est monté rotatif par sa rotule, le tourillon à rotule (50) présentant deux tourillons (54, 56) diamétralement opposés entre eux et fixés à une extrémité en forme de fourche (72) d'un levier (70), en étant entouré par la cuvette de palier dans la région de son profil sphérique.

2. Entraînement d'essuie-glace (10, 12, 14) selon la revendication 1,
**caractérisé en ce que**
le levier (70) est composé de deux pièces de tôle pliée et présente un joint (42) qui s'étend parallèlement à l'extrémité en forme de fourche (72) dans un plan médian longitudinal.

3. Entraînement d'essuie-glace (12) selon la revendication 1 ou 2,
**caractérisé en ce que**
la plaque manivelle (30) présente une forme contre-coudée et son extrémité libre présente une plus grande distance (66) à la platine (18) du moteur que la partie montée sur l'arbre de sortie (22).

4. Entraînement d'essuie-glace (12) selon le préambule de la revendication 1,
**caractérisé en ce que**
la plaque manivelle (30) présente une forme contre-coudée et son extrémité libre présente une plus grande distance (66) à la platine (18) du moteur que la partie montée sur l'arbre de sortie (22), cependant qu'à l'extrémité libre de la plaque manivelle (30) est fixée au moins un tourillon à rotule (48) dirigé vers la platine du moteur (18).
